# EUROPÄISCHE PATENTSCHRIFT

(11) **EP 0 593 996 B1**
(45) Veröffentlichungstag und Bekanntmachung des Hinweises auf die Patenterteilung: **27.11.1996**
(21) Anmeldenummer: 93116304.2
(22) Anmeldetag: 08.10.1993
(51) Int. Cl.: E01H 10/00

(54) **Streuvorrichtung mit Flüssigkeitszufuhr für Winterstrassendienst**
Spreading device with liquid feed for winterservice
Dispositif d'épandage avec alimentation de liquide pour service d'hiver

(30) Priorität: 21.10.1992 DE 4235426
(43) Veröffentlichungstag der Anmeldung: 27.04.1994
(73) Patentinhaber: KÜPPER-WEISSER GmbH, D-78195 Bräunlingen (DE)
(72) Erfinder: Rosenstihl, Paul, D-78199 Bräunlingen (DE)
(74) Vertreter: Neymeyer, Franz, Dipl.-Ing. (FH)

(56) Entgegenhaltungen:
- DE-A- 3 544 060
- DE-A- 3 937 675

## Beschreibung

Die Erfindung betrifft eine Streuvorrichtung für den Winterstraßendienst mit einem motorisch um eine vertikale Achse drehend angetriebenen, mit Wurfschaufeln versehenen Streuteller und mit einer Flüssigkeitszuführeinrichtung, durch welche Tauflüssigkeit zunächst in einen ortsfesten, oberhalb des Streutellers koaxial angeordneten Zwischenbehälter und aus diesem dosiert durch eine Auslaßöffnung, die sich in einem runden, zur Streutellerachse konzentrischen Abschnitt der Zwischenbehälterwand befindet, dem darunter angeordneten Streuteller drucklos über die Außenfläche der Zwischenbehälterwand zugeführt wird.

Es sind bereits Streuvorrichtungen der gattungsgemäßen Art bekannt, die sowohl zum Ausstreuen von angefeuchtetem Granulat, insbesondere von Feuchtsalz, als auch zum Ausstreuen von Tauflüssigkeit alleine benutzt werden können. Dabei bestehen die Zwischenbehälter für die Tauflüssigkeit jeweils aus kegelstumpfartigen Behältern, die konzentrisch zur Streutellerachse um diese herum angeordnet sind und aus denen die Tauflüssigkeit durch eine in der Gehäusewand vorgesehene Öffnung in einem bestimmten, relativ schmalen Bereich über die Außenfläche der Gehäusewand auf den Streuteller strömt (DE-C-40 39 795). Bei der Streuvorrichtung gemäß DE-C-35 44 060, die dem Oberbegriff des Anspruchs 1 entspricht, ist die Auslaßöffnung in der Zwischenbehälterwand durch eine Prallwand abgedeckt, auf welche die das Granulat zuführende, schacht-, schalen- oder rohrartige Granulatrutsche gerichtet ist. Dasselbe trifft auch für eine andere bekannte Streuvorrichtung zu (DE-C-39 37 675), bei der die besondere Gestaltung des Streutellers und dessen Wurfschaufeln auf eine bessere Durchmischung der granulierten und flüssigen Streumedien bzw. eine gleichmäßigere und intensivere Durchfeuchtung des vom Streuteller austretenden granulierten Streugutes ausgerichtet ist.

Bei einer weiteren bekannten Flüssigkeitsstreuvorrichtung zum Bestreuen von Verkehrsflächen (AT-B-369 076) sind die Mündungsöffnungen der Zuführleitung für die Befeuchtigungsflüssigkeit unmittelbar am Rand der Mündungsöffnung des Zuführschachtes für das Streugut an der dem Prallblech der Haube des Streutellers zugewandten Seite angeordnet und in Form von Bohrungen konzentrisch um die Drehachse des Streutellers in einer ringförmig verlaufenden Zufuhrleitung vorgesehen.

Mit diesen bekannten Streuvorrichtungen ist es zwar möglich, eine relativ gute Durchmischung des granulierten Streugutes mit Befeuchtungs- bzw. Tauflüssigkeit zu erzielen. Das Ausstreuen der Tauflüssigkeit allein ist jedoch nur in beschränktem Maße gezielt möglich, weil unterschiedliche Flüssigkeitsmengen, die fahrgeschwindigkeitsproportional ausgebracht werden sollen, bei den bekannten Streuvorrichtungen nicht nur zu einer ungleichmäßigen Verteilung, sondern auch zu stark schwankenden Streubildern, d.h. Streurichtungen, Streuweiten und Streudichten führen. Eine gezielte sparsame Tauflüssigkeitsausbringung auf Verkehrsflächen ist somit nicht in der gewünschten Form erreichbar.

Aufgabe der Erfindung ist es deshalb, eine Streuvorrichtung der gattungsgemäßen Art so zu verbessern, daß die Tauflüssigkeit in unterschiedlichen Mengen fahrgeschwindigkeitsproportional gezielt mit möglichst exakt definiertem Streubild und einer bestimmten Streurichtung mit gleichmäßiger Verteilung auf die zu behandelnde Verkehrsfläche ausbringbar ist.

Gelöst wird diese Aufgabe erfindungsgemäß dadurch, daß die Auslaßöffnung eine in Gebrauchslage im wesentlichen horizontale Überlaufkante aufweist, die sich über einen bestimmten Zentriwinkel erstreckt und daß auf der Flüssigkeitoberfläche des Zwischenbehälters ein vertikal beweglicher Schwimmer aufliegt, der eine auf die Größe der Flüssigkeitsoberfläche abgestimmte untere Stirnfläche aufweist und in Abhängigkeit von der regelbaren Menge der unterhalb des Schwimmers erfolgenden Flüssigkeitszufuhr die Auslaßöffnung zumindest annähernd proportional öffnet oder schließt.

Insbesondere ist es mit der erfindungsgemäßen Lösung möglich, eine konstante, ausschließlich von der Zuführmenge der Tauflüssigkeit in den Zwischenbehälter abhängige, exakt dosierbare Flüssigkeitsmenge in einem definierten Umfangsbereich der Wand des Zwischenbehälters auf den Streuteller zu bringen und damit ein konstantes Streubild mit definierter Streurichtung, insbesondere einen konstanten Streuwinkel des Streufächers bei gegebener Drehzahl des Streutellers zu erreichen.

Durch den vertikal beweglichen, im Zwischenbehälter angeordneten und auf der Oberfläche der Tauflüssigkeit mit dem Eigengewicht aufliegende Schwimmer bewirkt, daß diese Oberfläche der Tauflüssigkeit im Bereich der Überlaufkante eine jeweils gleichmäßige Höhe beibehält, nicht überschwappt und keine Wellen bilden kann, wobei diese Höhe durch die Zuführmenge variierbar ist. Es wird durch den Schwimmer somit eine konstante Überlaufmenge an der ganzen vom Schwimmer freigegebenen Überlaufkante erzielt, wobei diese Menge ausschließlich von der Zufuhrmenge der Tauflüssigkeit in den Zwischenbehälter unterhalb des Schwimmers abhängig ist.

Vor allem bei geringen Tauflüssigkeitsmengen pro Flächeneinheit der zu bestreuenden Fläche ist die Ausgestaltung nach Anspruch 2 von erheblichem Vorteil, da durch sie gewährleistet wird, daß die Tauflüssigkeit aus dem Zwischenbehälter über die Überlaufkante in einem ausreichend dicken Strom und somit auch in einem möglicherweise beschränktem Winkelbereich der Überlaufkante auf den Streuteller gelangt, so daß auch in diesem Fall ein definiertes Streubild entsteht, dessen Anfangsradiale bei gegebener Streutellerdrehzahl etwa gleichbleibend positioniert ist. Es kann sich zwischen der Überlaufkante und der horizontalen Unterseite des Schwimmers eine scherenartige Öffnung ergeben, die sich über einen Teil der Überlaufkante erstreckt.

Während die Ansprüche 3 und 4 zweckmäßige Ausgestaltungen einerseits der Auslaßöffnung und andererseits des Zwischenbehälters betreffen, sind die Ausgestaltungen nach den Ansprüchen 5 und 6 geeignet, auch Granulat mit der Tauflüssigkeit anzufeuchten und dabei die gewünschte intensive Durchmischung der beiden Streumedien zu gewährleisten.

Anhand der Zeichnung wird im folgenden ein Ausführungsbeispiel der Erfindung näher erläutert. Es zeigt:
- Fig. 1: einen Streuteller in Draufsicht mit geschnittenem Flüssigkeitszwischenbehälter;
- Fig. 2: einen Schnitt II-II aus Fig. 1;
- Fig. 3: den mit der Auslauföffnung versehenen Abschnitt des Flüssigkeitszwischenbehälters in geschnittener, perspektivischer Ansicht;
- Fig. 4: einen hälftigen Teilschnitt durch den Flüssigkeitszwischenbehälter;
- Fig. 5: die Flüssigkeitszufuhr vom Flüssigkeitszwischenbehälter im Schnitt und
- Fig. 6: die Auslaßöffnung in Seitenansicht.

Die in der Zeichnung dargestellte Streuvorrichtung weist einen Streuteller 1 auf, der mittels einer zylindrischen Nabe 2 an einer vertikalen Streutellerwelle 3 befestigt ist und der von einem regelbaren, in der Zeichnung nicht dargestellten Hydraulikmotor in Richtung des Pfeiles 5 drehend angetrieben wird. Auf der Oberseite des Streutellers 1 ist im Bereich des inneren planebenen Abschnitts 6 konzentrisch zur Drehachse 8 ein kegelstumpfartiger Leitkörper 9 befestigt, der sich mit dem Streuteller 1 dreht. Der Leitkörper 9 weist eine Umfangsverzahnung mit einer Anzahl von Prallflächen 10 auf, die von den in Drehrichtung vorlaufenden Zahnflanken sägezahnartiger Zähne 10' gebildet sind und die sich in radialer Richtung von innen nach außen und in axialer Richtung von unten nach oben verjüngen. An jede Prallfläche 10 schließt sich in gleicher Richtung radial nach außen verlaufend eine Wurfschaufel 4 an, die bis zum äußeren Rand 1' des Streutellers reicht und lückenlos auf der Streutelleroberseite aufsitzt. Bei dem zeichnerisch dargestellten Ausführungsbeispiel verlaufen diese Wurfschaufeln, von innen nach außen gesehen, zunächst in Richtung der Prallflächen 10 etwa bis zum halben Radius des Streutellers und haben im äußeren Bereich einen geschwungenen Verlauf.

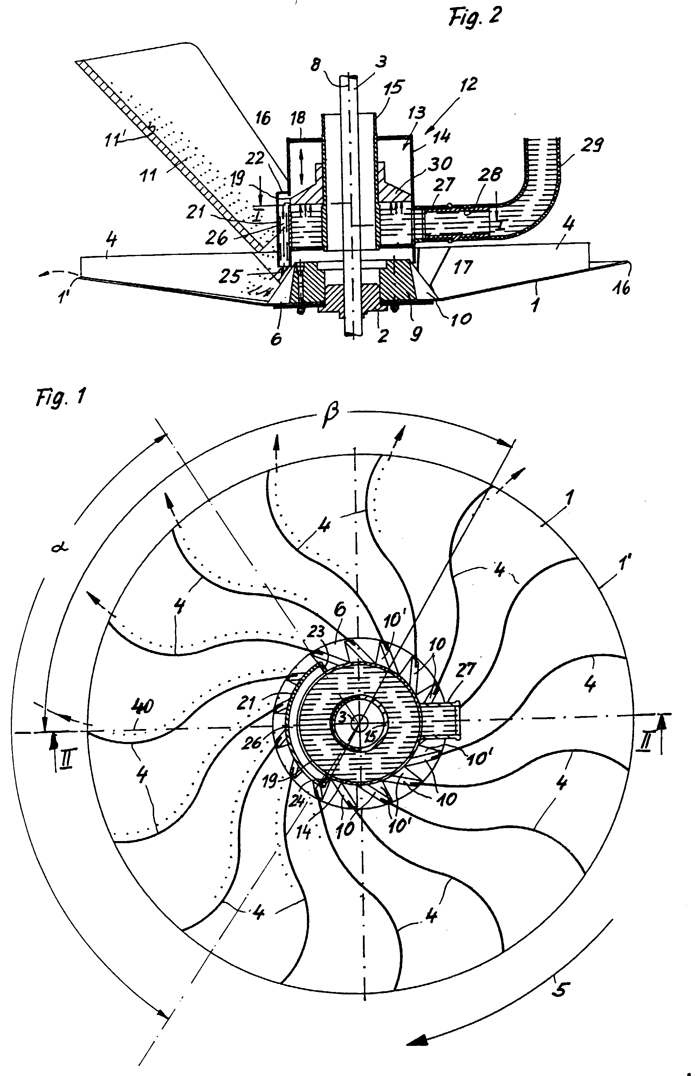

Wie aus Fig. 1 ersichtlich ist, befindet sich oberhalb des Streutellers 1 in einem geringen axialen Abstand vom Umfang des Leitkörpers 9 eine schräg auf die Prallflächen 10 gerichtete, im Querschnitt annähernd U- oder V-förmige Granulatrutsche 11 mit einer Leitfläche 11', über welche dem Streuteller 1 in regelbaren, fahrgeschwindigkeitsabhängigen Mengen granuliertes Streugut, wie beispielsweise Streusalz, zugeführt werden kann.

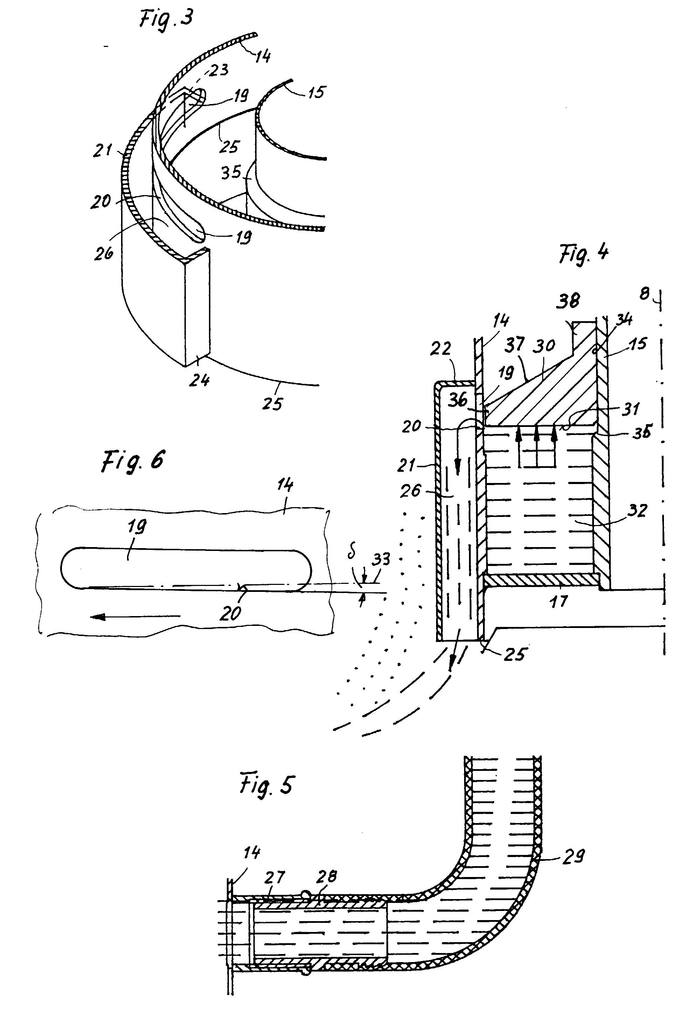

Um dem Streuteller, genauer gesagt, auf die Prallflächen 10 des Leitkörpers 9 wahlweise auch in exakt dosierbaren Mengen und exakt definierten Winkelbereichen Tauflüssigkeit, z. B. in Form von Natronlauge oder dgl., zuführen zu können, ist oberhalb des Leitkörpers 9 konzentrisch zur Streutellerwelle 3 eine Flüssigkeitszuführeinrichtung 12 angeordnet. Diese besteht aus einem zur Streutellerwelle 3 konzentrisch angeordneten Zwischenbehälter 13 mit einer zylindrischen Außenwand 14 und einem dazu konzentrischen Innenrohr 15, welches frei von der Streutellerwelle 3 durchragt wird, so daß der Zwischenbehälter 13 einen ringförmigen Hohlraum 16 besitzt. Dieser Hohlraum 16 ist unterseitig durch einen ringförmigen Boden 17 und oberseitig durch einen ebenfalls ringförmigen Deckel 18 geschlossen. Dieser Zwischenbehälter ist ortsfest und undrehbar angeordnet. Er besitzt auf der der Granulatrutsche 11 zugewandten Umfangsseite eine schlitzförmige Auslaßöffnung 19 mit einer im wesentlichen horizontalen Überlaufkante 20. Wie am besten aus Fig. 6 ersichtlich ist, steigt diese Überlaufkante 20 in Drehrichtung des Streutellers 1 (Pfeil 5) gegenüber der Horizontalen 33 geringfügig, beispielsweise mit einem Steigungswinkel δ von etwa 1° bis 3° an. Die Auslaßöffnung 19 erstreckt sich über einen Zentrielwinkel α von 115° (Fig. 1), und sie ist durch eine zur Außenwand 14 parallele Prallwand 21 abgedeckt, die sich oberhalb der Auslaßöffnung 19 durch einen Deckel 22 und seitlich der Auslaßöffnung 19 durch Radialwände 23 und 24 an die Mantelfläche der Außenwand 14 des Zwischenbehälters 13 anschließt. Die Prallwand 21 reicht vom Deckel 22, der oberhalb der Auslaßöffnung 19 angeordnet ist, bis zur Unterkante 25 der nach unten über den Boden 17 hinaus verlängerten Außenwand 14, die unmittelbar über den schrägen Zahnflanken der Zähne 10' des Leitkörpers 9 endet. Durch die Prallwand 21 ist somit ein schachtartiger Hohlraum 26 gebildet, in welchem Tauflüssigkeit aus dem Hohlraum 16 des Zwischenbehälters 13 über die Überlaufkante 20 an der Mantelfläche der Außenwand 14 entlang, über den unterhalb der Auslaßöffnung 19 liegenden Wandabschnitt nach unten auf die Prallflächen 10 des Leitkörpers 9 strömen kann. Gegebenenfalls gleichzeitg zugeführtes Granulat, das von der Granulatrutsche 11 gegen die Außenseite dieser Prallwand 21 bzw. auf die Prallflächen 10 des Leitkörpers 9 geleitet wird, prallt an diesen ab und gelangt von dort auf den drehenden Streuteller 1, der es zentrifugal auswirft.

Auf der der Auslaßöffnung 19 diametral gegenüberliegenden Seite ist der Zwischenbehälter 13 mit einem Anschlußstutzen 27 versehen, an welchen mittels eines einschraubbaren Rohrstückes 28 ein Schlauch 29 angeschlossen ist, durch welchen Tauflüssigkeit 32 von einer regelbaren, nicht dargestellten Pumpe in den Hohlraum 16 des Zwischenbehälters 13 befördert wird.

Um die Flüssigkeitsmenge, welche den Zwischenbehälter 13 durch die Auslaßöffnung 19 verläßt, möglichst exakt bestimmen und regeln zu können, ist im Hohlraum 16 ein kegelstumpfförmiger, am Innenrohr 15 axial beweglich geführter Schwimmer 30 angeordnet, der mit einer planebenen unteren Stirnfläche 31 auf der sich im Zwischenbehälter 15 befindenden Tauflüssigkeitssäule 32 aufliegt und dessen spezifisches Gewicht zumindest geringfügig kleiner ist als das der Tauflüssigkeit 32. Der Schwimmer besteht vorzugsweise aus Kunststoff, jedenfalls aber aus einem säurefesten Material, das schwimmfähig ist auf der Tauflüssigkeit 32.
Er besitzt einen zylindrischen Abschnitt 36, dessen Durchmesser auf den Innendurchmesser der Außenwand 14 abgestimmt ist, so daß ein radiales Spiel von 0,1 bis 0,2 mm vorhanden ist zwischen dem Schwimmer 30 und der Außenwand 14. An diesen zylindrischen Abschnitt 36 schließt sich eine konische Oberfläche 37 an, die an einer Nabe 38 endet (Fig. 4).

Für die funktionsweise dieses Schwimmers ist es auch wichtig, daß die Flüssigkeitszufuhr in den Zwischenbehälter 13 unterhalb der Auslaßöffnung 19 erfolgt, so daß die zuströmende Tauflüssigkeits sich jeweils unterhalb des Schwimmers 30 befindet.

Der Schwimmer 30 hat auf die sich im Zwischenbehälter befindende Tauflüssigkeit 32 die Wirkung, daß sich deren ganze Oberfläche stets in einer durch die Unterseite des Schwimmers bestimmten Ebene befindet, daß sie keine Wellen bilden und auch nicht unkontrolliert über die Überlaufkante 20 der Auslauföffnung 19 schwappen kann.

Durch den Schwimmer 30, der sich je nach zugeführter Tauflüssigkeitsmenge mehr oder weniger hebt und senkt und dabei die Auslaßöffnung zumindest annähernd proportional zur Zufuhrmenge öffnet und schließt, wird sichergestellt, daß die mengenmäßige Zufuhr der Tauflüssigkeit 32 auf den Streuteller 1 exakt regelbar ist.

Aber nicht nur mengenmäßig ist eine exakte Regelung von Wichtigkeit, sondern auch örtlich; das bedeutet, daß der Winkelbereich, in welchem Tauflüssigkeit auf den Streuteller gelangt möglichst exakt definiert sein muß, um auch ein davon abhängiges, definiertes Streubild z. B. mit einem Streufächerwinkel β zu erhalten, das sich, im übrigen wie bekannt, mit ändernder Streutellerdrehzahl ebenfalls ändert und zwar sowohl bezüglich des Streufächerwinkels β als auch bezüglich der Richtung, in welcher das Streugut ausgeschleudert wird.

Insbesondere dann, wenn sehr geringe Flüssigkeitsmengen ausgestreut werden sollen und auch dabei noch ein möglichst definiertes Streubild erreicht werden soll, ist es von Bedeutung, daß die die Überlaufkante 20 der Auslaßöffnung 19 überströmende Flüssigkeitsmenge in einem definierten Winkelbereich auf den Streuteller gelangt. Es ist deshalb zweckmäßig, die Überlaufkante 20 nicht exakt horizontal anzuordnen sondern sie, wie schon erwähnt in Fig. 6 schematisch dargestellt, in Drehrichtung des Streutellers 1 um einen Steigungswinkel δ von etwa 1° bis 3° gegenüber der Horizontalen 33 ansteigen zu lassen, so daß bei minimalster Streumenge an Tauflüssigkeit nicht die gesamte Länge der Überlaufkante 20 als offener Überlaufbereich zur Verfügung steht, sondern nur der jeweils unterhalb der Unterseite 31 des Schwimmers 30 verbleibende Teil scherenartig freigegebene Abschnitt der Überlaufkante 20.

Es ist damit sichergestellt, daß der sich ändernde Streuflächenwinkel bei einer angenommenen Drehzahl des Streutellers 1 immer an der gleichen Anfangsradialen 40 (Fig. 1) beginnt, also eine definierte Streurichtung eingehalten wird.

Damit der Schwimmer 30 leicht beweglich ist, ist er mit seiner zylindrischen Zentralbohrung 34 auf der ebenfalls zylindrischen Mantelfläche des Innenrohres 15 geführt.

Auf einer unterhalb der Überlaufkante 20 der Auslauföffnung liegenden Ringschulter 35 des Innenrohres findet der Schwimmer bei absinkendem Flüssigkeitspegel einen vertikalen Anschlag, der ihn an der weiteren Abwärtsbewegung hindert.

Da die untere Stirnfläche 31 des Schwimmers 30 exakt rechtwinklig zur Achse seiner Bohrung 34 verläuft, nimmt sie auch eine zur Drehachse 8 des Streutellers 1 rechtwinklige Lage ein. Das bedeutet, daß die Drehachse 8 des Streutellers 1 im Betrieb eine möglichst exakt vertikale Lage einnehmen muß, wenn die beschriebenen Wirkungen eintreten sollten. Denn nur dann befindet sich auch die als Horizontale 33 bezeichnete Linie tatsächlich in der Horizontallage. Geringe Abweichungen der Drehachse 8 von der Vertikallage beeinträchtigen jedoch die Wirkungsweise des Schwimmers im Zusammenwirken mit der Überlaufkante 20 kaum, jedenfalls nicht merklich.

## Patentansprüche

1. Streuvorrichtung für den Winterstraßendienst mit einem motorisch um eine vertikale Achse drehend angetriebenen, mit Wurfschaufeln (4) versehenen Streuteller (1) und mit einer Flüssigkeitszuführeinrichtung (12), durch welche Tauflüssigkeit zunächst in einen ortsfesten, oberhalb des Streutellers (1) koaxial angeordneten Zwischenbehälter (13) und aus diesem dosiert durch eine Auslaßöffnung (19), die sich in einem zylindrischen, zur Streutellerachse konzentrischen Abschnitt der Zwischenbehälterwand befindet, dem darunter angeordneten Streuteller (1) drucklos über die Außenfläche der Zwischenbehälterwand (14) zugeführt wird,
**dadurch gekennzeichnet,**
daß die Auslaßöffnung (19) eine in Gebrauchslage im wesentlichen horizontale Überlaufkante (20) aufweist, die sich über einen bestimmten Zentriwinkel (α) erstreckt und daß auf der Flüssigkeitsoberfläche des Zwischenbehälters (13) ein vertikal beweglicher Schwimmer (30) aufliegt, der eine auf die Größe der Flüssigkeitsoberfläche abgestimmte untere Stirnfläche (31) aufweist und in Abhängigkeit von der Menge der unterhalb des Schwimmers (30) erfolgenden Flüssigkeitszufuhr die Auslaßöffnung (19) zumindest annähernd proportional öffnet oder schließt.

2. Streuvorrichtung nach Anspruch 1, dadurch gekennzeichnet, daß die Überlaufkante (20) der Auslaßöffnung (19) in Drehrichtung (Pfeil 5) des Streutellers (1) gegenüber der Horizontalen um einen Winkel (δ) von etwa 1° bis 3° ansteigt.

3. Streuvorrichtung nach Anspruch 1, dadurch gekennzeichnet, daß sich die Überlaufkante (20) der Auslaßöffnung (19) über einen Zentriwinkel (α) von etwa 115° erstreckt.

4. Streuvorrichtung nach einem der Ansprüche 1 bis 3, dadurch gekennzeichnet, daß der Zwischenbehälter (13) eine zylindrische, zur Streutellerachse (8) konzentrische Form aufweist.

5. Streuvorrichtung nach einem der Ansprüche 1 bis 4, dadurch gekennzeichnet, daß der unterhalb der Auslaßöffnung (19) liegende, von der Tauflüssigkeit (32) überströmte Wandabschnitt des Zwischenbehälters (13) auf die Umfangsverzahnung (10') eines kegelförmigen, zentralen Leitkörpers (9) des Streutellers (1) gerichtet ist.

6. Streuvorrichtung nach einem der Ansprüche 1 bis 5, dadurch gekennzeichnet, daß die Auslaßöffnung (19) und der von der Tauflüssigkeit (32) überströmte Wandabschnitt des Zwischenbehälters (13) von einer konzentrischen Prallwand (21) umgeben ist, auf welche die Leitfläche (11') einer schräg stehenden, schalen- oder rohrartigen, exzentrisch zur Streutellerachse (8) angeordneten Granulatrutsche (11) gerichtet ist, über welche granuliertes Streugut, z.B. Streusalz, in im wesentlichen trockenen Zustand dem Streuteller (1) zugeführt werden kann.

## Claims

1. Spreading device for winter road service with a motor driven spreading plate (1) rotating about a vertical axis provided with spreading blades (4) and with a liquid feed device (12) by means of which thaw fluid is fed firstly into a fixed intermediate container (13) arranged coaxially above the spreading plate (1) and from here is dispensed through an outlet opening (19), which is located in a cylindrical section of the intermediate container wall concentric to the spreading plate axis, to the spreading plate (1) arranged underneath without pressure over the outer surface of the intermediate container wall (14),
characterised in that
the outlet opening (19) has an essentially horizontal overflow edge (20) in the position of use which extends over a specific central angle (α) and in that a vertically moving float (30) rests on the liquid surface of the intermediate container (13) which float has a lower end face (31) adjusted to the size of the liquid surface and depending on the fluid intake underneath the float (30) the outlet opening (19) opens or closes at least approximately proportionally.

2. Spreading device according to claim 1, characterised in that the overflow edge (20) of the outlet opening (19) rises in the direction of rotation (arrow 5) of the spreading plate (1) relative to the horizontal by an angle (β) of about 1° to 3°.

3. Spreading device according to claim 1, characterised in that the overflow edge (20) of the outlet opening (19) extends over a central angle (α) of about 115°.

4. Spreading device according to one of claims 1 to 3, characterised in that the intermediate container (13) has a cylindrical form concentric to the spreading plate axis (8).

5. Spreading device according to one of claims 1 to 4, characterised in that the wall section of the intermediate container (13) underneath the outlet opening (19) flowed over by the thawed liquid (32) is aligned to the peripheral teeth (10') of a conical, central guiding body (9) of the spreading plate (1).

6. Spreading device according to one of claims 1 to 5, characterised in that the outlet opening (19) and the wall section of the intermediate container (13) flowed over by the thawed liquid (32) is surrounded by a concentric impact wall (21) towards which the guiding surface (11') of an oblique, shell-like or tubular granular material slide (11) arranged off-centre relative to the spreading plate axis (8) is directed, by means of which granulated grit e.g. de-icing salt, can be fed into the spreading plate (1) essentially in a dried state.

## Revendications

1. Appareil de répandage pour le service d'hiver des routes, comportant un disque répandeur (1) qu'un moteur fait tourner autour d'un axe vertical et qui est pourvu d'ailettes de projection (4), et un dispositif d'amenée de liquide (12) qui amène du liquide de dégel d'abord dans un réservoir intermédiaire fixe (13) placé coaxialement au-dessus du disque répandeur (1) et, de ce réservoir, de manière dosée, par un orifice de sortie (19) situé dans une partie cylindrique concentrique à l'axe du disque répandeur de la paroi du réservoir intermédiaire, sans pression, au disque répandeur (1) placé dessous, sur la face extérieure de la paroi (14) du réservoir intermédiaire,
caractérisé par le fait
que l'orifice de sortie (19) présente un bord déversoir (20) sensiblement horizontal en position d'utilisation qui s'étend sur un angle au centre déterminé (α), et qu'à la surface du liquide du réservoir intermédiaire (13) repose un flotteur mobile verticalement (30) qui présente une face frontale inférieure (31) adaptée à la grandeur de la surface du liquide et, en fonction du débit de l'arrivée de liquide, ayant lieu au-dessous du flotteur (30), ouvre ou ferme au moins approximativement proportionnellement l'orifice de sortie (19).

2. Appareil de répandage selon la revendication 1, caractérisé par le fait que le bord déversoir (20) de l'orifice de sortie (19) monte d'un angle (δ) d'environ 1° à 3° par rapport à l'horizontale dans le sens de rotation (flèche 5) du disque répandeur (1).

3. Appareil de répandage selon la revendication 1, caractérisé par le fait que le bord déversoir (20) de l'orifice de sortie (19) s'étend sur un angle au centre (α) d'environ 115°.

4. Appareil de répandage selon l'une des revendications 1 à 3, caractérisé par le fait que le réservoir intermédiaire (13) a une forme cylindrique et son axe coïncide avec l'axe (8) du disque répandeur.

5. Appareil de répandage selon l'une des revendications 1 à 4, caractérisé par le fait que la partie de paroi du réservoir intermédiaire (13) située au-dessous de l'orifice de sortie (19) sur laquelle coule le liquide de dégel (32) est dirigée vers la denture périphérique (10') d'un corps directeur central conique (9) du disque répandeur (1).

6. Appareil de répandage selon l'une des revendications 1 à 5, caractérisé par le fait que l'orifice de sortie (19) et la partie de paroi du réservoir intermédiaire (13) sur laquelle coule le liquide de dégel (32) sont entourés par une paroi de renvoi coaxiale (21) vers laquelle est dirigée la surface directrice (11') d'un glissoir à granulat oblique (11) du genre cuvette ou tube placé excentriquement par rapport à l'axe (8) du disque répandeur et par lequel de la matière granulée à répandre, par exemple du sel, peut être amenée à l'état sensiblement sec au disque répandeur (1).
